# FASCICULE DE BREVET EUROPEEN

(11) **EP 0 715 113 B1**
(45) Date de publication et mention de la délivrance du brevet: **06.06.2001**
(21) Numéro de dépôt: 95402555.7
(22) Date de dépôt: 15.11.1995
(51) Int. Cl.: F16L 55/07, F01P 11/02

(54) **Dispositif de purge ou de vidange d'un conduit**
Entleer- oder Ablassvorrichtung für eine Leitung
Purging or draining device for a conduit

(30) Priorité: 02.12.1994 FR 9414524
(43) Date de publication de la demande: 05.06.1996
(73) Titulaire: HUTCHINSON, 75008 Paris (FR)
(72) Inventeur: Godeau, Denis, F-45260 Vieilles Maisons (FR); Garcia, Anthony, F-45700 Villemandeur (FR)
(74) Mandataire: Ramey, Daniel

(56) Documents cités:
- EP-A- 0 403 322
- FR-A- 2 588 367
- US-A- 3 910 550
- US-E- R E28 844

## Description

L'invention concerne un dispositif de purge ou de vidange d'un conduit, ce dispositif comprenant un organe d'obturation d'un passage débouchant dans le conduit, et des moyens d'étanchéité coopérant avec cet organe.

Des dispositifs de ce genre sont utilisés dans l'industrie automobile par exemple pour la purge d'un conduit de circulation de liquide de refroidissement d'un moteur à combustion interne, ainsi que dans d'autres domaines techniques lorsqu'il faut assurer le dégazage, la purge ou la vidange d'un liquide.

On a déjà proposé de réaliser ces dispositifs par surmoulage ou par fixation sur un conduit d'un bossage comprenant un passage traversant qui débouche dans le conduit. Un insert formant écrou est fixé, par exemple collé, dans le passage ou est partiellement noyé dans la matière qui délimite ce passage, et reçoit une vis d'obturation. En fin de vissage, la tête de la vis vient fermer le passage de façon plus ou moins étanche, cette étanchéité pouvant être renforcée par utilisation d'un joint annulaire d'étanchéité.

Il est cependant difficile d'aligner correctement l'insert formant écrou sur l'axe du passage de façon à ce qu'on puisse ensuite monter la vis dans l'écrou sans problème. Tout défaut d'alignement se traduit en effet par un montage difficile de la vis, par un effort de vissage ou de dévissage plus ou moins important et par des défauts d'étanchéité entre la tête de la vis et le débouché du passage, ces défauts pouvant être aggravés par d'éventuelles bavures de moulage au débouché extérieur du passage.

Il est par ailleurs connu du document US 3,910,550 une purge pour radiateur. Cette purge est vissée sur une paroi et nécessite une opération nouvelle supplémentaire de vissage pour positionner la purge.

L'invention a notamment pour but d'éviter ces inconvénients.

Elle a également pour but de simplifier et de faciliter l'utilisation d'un dispositif du type précité, et de rendre son fonctionnement beaucoup plus sûr.

Elle a également pour but un dispositif du type précité, qui soit particulièrement facile à monter ou à assembler en une seule opération, sans risque d'erreur.

On remarquera en particulier que le Brevet US 3,910,550 (ITW) concerne une purge pour radiateur qui est destinée à être fixée sur une paroi de radiateur et qui comporte un organe vissable et un insert qui sont pré-assemblés en deux opérations, à savoir par encliquetage dans un premier temps et par vissage dans un deuxième temps.

Elle a encore pour but un dispositif de ce type qui soit universel ou quasi-universel, dans la mesure où il sera utilisable sans adaptation ou modification particulière dans des domaines différents.

Elle propose donc un dispositif de purge ou de vidange d'un conduit, comprenant un organe vissable d'obturation monté dans un passage débouchant dans le conduit, et des moyens d'étanchéité coopérant avec cet organe, tel que défini dans la revendication 1.

Ce dispositif présente un certain nombre d'avantages :
- on peut faire passer l'organe vissable de sa position d'obturation à sa position de vidange ou de purge et réciproquement, par rotation rapide,
- cet organe vissable peut être monté dans le passage précité par clipsage ou encliquetage élastique, en translation, grâce à l'élasticité radiale de son extrémité interne,
- cette élasticité radiale permet un rattrapage des jeux et des tolérances de fabrication, de sorte que l'organe vissable peut être fabriqué en grande série à bas prix de revient,
- tous les inconvénients liés aux défauts d'alignement d'un écrou dans un passage de purge ou de vidange sont évités.

Selon une autre caractéristique de l'invention, le corps dudit organe comprend deux rainures hélicoïdales précitées identiques et symétriques l'une de l'autre par rapport à l'axe dudit corps, et la surface interne dudit passage comprend deux nervures hélicoïdales en saillie identiques et symétriques l'une de l'autre par rapport à l'axe du passage et engagées chacune dans une rainure dudit corps.

Cette disposition double et symétrique des rainures hélicoïdales sur le corps de l'organe vissable et des nervures hélicoïdales sur la surface interne du passage, permet un bon guidage de l'organe vissable entre ses positions d'obturation et de purge ou de vidange et facilite sa manoeuvre.

Selon encore une autre caractéristique de l'invention, chaque rainure hélicoïdale et chaque nervure hélicoïdale précitées s'étendent sur moins de 180° par rapport à l'axe du corps ou du passage, respectivement.

La manoeuvre de l'organe vissable entre ses positions d'obturation ou de purge ou de vidange s'effectue alors par rotation sur moins d'un demi-tour.

Selon encore une autre caractéristique, chaque rainure hélicoïdale se termine, du côté de l'extrémité interne du corps, par une nervure longitudinale droite destinée à être engagée dans un espace laissé libre entre les nervures hélicoïdales de la surface interne du passage.

Quand ces nervures longitudinales sont dans les espaces libres entre les nervures hélicoïdales du passage, les autres extrémités des rainures hélicoïdales sont sensiblement alignées, parallèlement à l'axe du corps et du passage, avec les extrémités situées vers l'extérieur des nervures hélicoïdales du passage.

Ainsi, lorsqu'on procède au montage du dispositif selon l'invention, il suffit de positionner correctement l'organe d'obturation au débouché extérieur du passage et de le pousser par translation à l'intérieur de ce passage, pour l'amener directement en butée dans sa position d'obturation, par clipsage ou encliquetage élastique et sans qu'il soit nécessaire de le faire tourner autour de son axe. Ce clipsage ou cet encliquetage élastique produit un bruit audible qui confirme que l'organe vissable a été placé correctement dans sa position d'obturation.

Dans une première forme de réalisation de l'invention, lesdites nervures hélicoïdales sont formées sur une coupelle tronconique ajourée qui est noyée dans la matière délimitant ledit passage.

Dans une autre forme de réalisation, ces nervures hélicoïdales sont formées de moulage sur la face interne d'une pièce tubulaire rapportée sur le conduit ou faisant partie de celui-ci.

Dans tous les cas, l'étanchéité peut être assurée par des saillies ou des lèvres annulaires formées sur la surface interne du passage ou au débouché de celui-ci et coopérant à étanchéité avec la partie supérieure du corps de l'organe d'obturation ou avec une tête de manoeuvre formée à l'extrémité supérieure du corps de l'organe d'obturation, ou bien par un joint torique d'étanchéité monté sur la partie supérieure du corps de l'organe d'obturation.

L'invention sera mieux comprise et d'autres caractéristiques, détails et avantages de celle-ci apparaitront plus clairement à la lecture de la description qui suit, faite à titre d'exemple en référence aux dessins annexés dans lesquels :
la figure 1 est une vue schématique, en coupe axiale partielle, d'un dispositif selon l'invention;
la figure 2 est une vue schématique en coupe axiale d'une coupelle faisant partie de ce dispositif;
les figures 3 et 4 sont des vues schématiques de dessus et en perspective de cette coupelle ;
la figure 5 est une vue schématique en coupe axiale, selon la ligne V - V de la figure 6, d'un organe d'obturation selon l'invention;
la figure 6 est une vue en élévation de cet organe d'obturation ;
la figure 7 est une vue de gauche de l'organe d'obturation de la figure 6 ;
les figures 8 et 9 sont des vues schématiques à plus grande échelle et en coupe transversale de cet organe, selon les lignes VIII - VIII et IX - IX de la figure 6 ;
la figure 10 est une vue schématique en perspective de cet organe d'obturation ;
la figure 11 est une vue schématique en perspective d'une variante de réalisation d'une partie du dispositif selon l'invention.

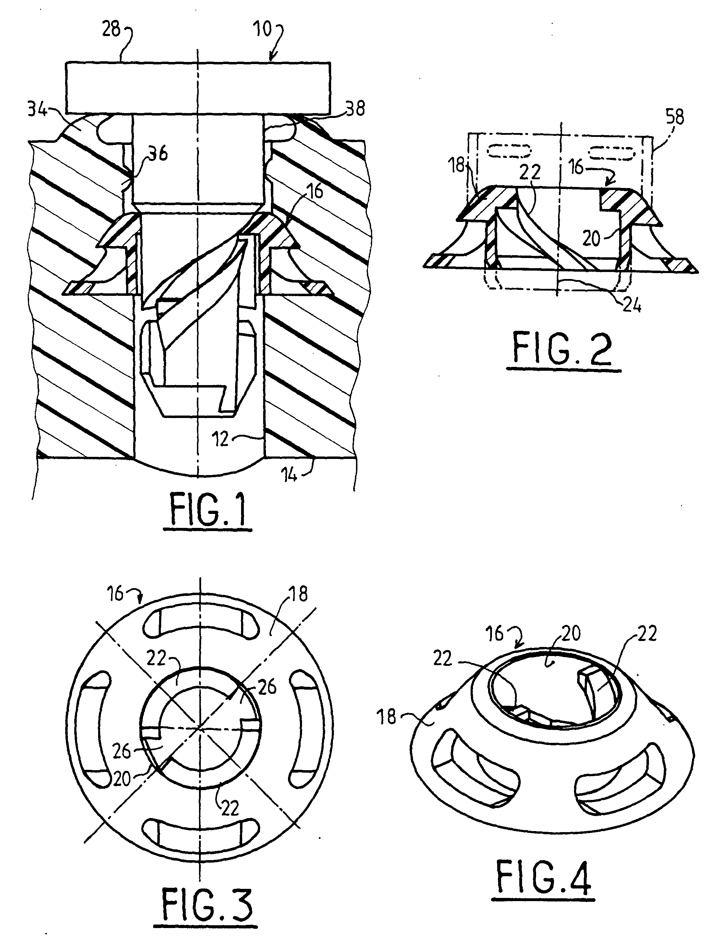

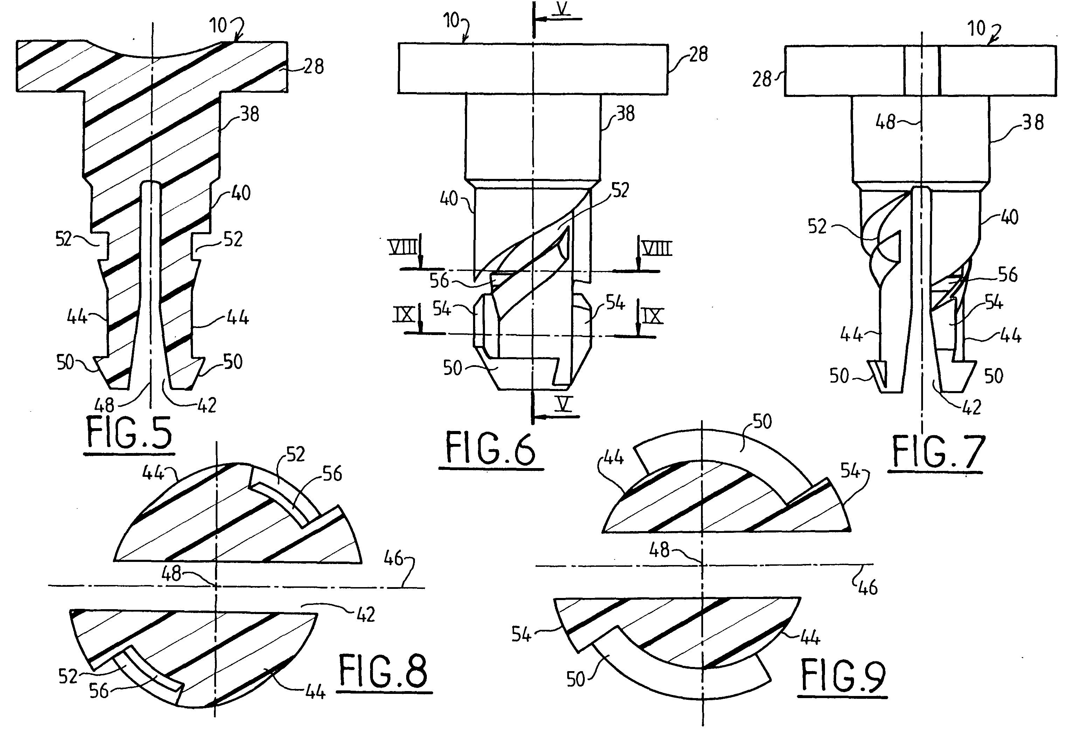

On se réfère d'abord aux figures 1 à 10, qui représentent une première forme de réalisation d'un dispositif selon l'invention, ce dispositif constituant par exemple un dispositif de purge d'un conduit de circulation d'un liquide de refroidissement de moteur à combustion interne, ou analogue.

Ce dispositif comprend un organe vissable 10 d'obturation d'un passage 12 débouchant dans un conduit 14, cet organe 10 étant monté dans une coupelle 16 noyée dans la matière qui délimite le passage 12.

La coupelle 16, qui est mieux visible dans les figures 2 à 4, est une pièce de forme générale tronconique, par exemple métallique ou en matière plastique, comprenant une surface extérieure tronconique 18 largement ajourée pour faciliter son ancrage dans la matière délimitant le passage 12, et une surface interne cylindrique 20 sur laquelle sont formées en saillie deux nervures hélicoïdales 22 qui s'étendent sur un peu moins de 180° autour de l'axe 24 de la coupelle (par exemple sur 150° environ), en étant ainsi séparées l'une de l'autre par deux espaces libres 26 qui sont parallèles à l'axe 24 et symétriques l'un de l'autre par rapport à cet axe.

Les nervures hélicoïdales 22 sont à section transversale carrée ou rectangulaire et s'étendent sur toute la hauteur de la coupelle 16.

Cette coupelle reçoit l'organe d'obturation 10 qui est représenté plus en détail aux figures 5 à 10.

Cet organe d'obturation comprend une tête de manoeuvre 28, de forme cylindrique et comportant dans sa face supérieure une encoche diamétrale 30 destinée à recevoir l'extrémité d'un tournevis, et deux encoches semi-cylindriques 32 formées dans sa surface périphérique et diamétralement opposées l'une à l'autre.

La tête 28 a un diamètre supérieur à celui du débouché du passage 12 et peut coopérer par pression avec une lèvre annulaire d'étanchéité 34 (figure 1) formée autour du débouché du passage 12. Eventuellement, une nervure annulaire 36 peut être formée en saillie sur la surface interne de la partie supérieure du passage 12 pour coopérer avec étanchéité avec la partie supérieure 38 du corps de l'organe 10.

En variante, on peut également monter un joint torique d'étanchéité sur la partie supérieure 38 du corps de l'organe 10, immédiatement sous la tête de manoeuvre 28.

Le corps de l'organe 10 comprend, outre la partie cylindrique supérieure 38 reliée à la tête 28, une partie inférieure 40 comprenant une fente axiale 42 qui s'étend longitudinalement sur toute la hauteur de la partie inférieure 40 et transversalement sur toute la largeur de cette partie 40, de sorte que celle-ci est formée en fait de deux branches parallèles 44 qui s'étendent de part et d'autre d'un plan longitudinal médian 46 de l'organe 10 et qui sont identiques et symétriques l'une de l'autre par rapport à l'axe 48 de l'organe 10.

A leur extrémité inférieure sur le dessin, les branches 44 comprennent chacune un rebord tronconique 50 à sommet orienté vers le bas, la grande base de ces rebords tronconiques ayant un diamètre extérieur qui est légèrement supérieur au diamètre entre les nervures hélicoïdales 22 de la coupelle 16, de telle sorte que l'extrémité inférieure de l'organe 10 peut être montée par clipsage ou encliquetage élastique dans la coupelle 16, les extrémités inférieures des deux branches 44 étant rapprochées l'une de l'autre par déformation élastique, les faces supérieures des rebords tronconiques 50 venant dans l'autre sens buter sur les extrémités inférieures des nervures hélicoïdales 22 et empêchant l'extraction complète de l'organe d'obturation 10 hors du passage 12.

Par ailleurs, chaque branche 44 est formée avec une rainure hélicoïdale 52 dont le pas et la section transversale sont adaptés à ceux des nervures hélicoïdales 22 de la coupelle 16, chaque rainure 52 s'étendant sur un peu moins de 180° autour de l'axe 48 et étant ouverte à ses extrémités, dont l'une se trouve au voisinage de l'extrémité supérieure de la branche 44 et dont l'autre est à une certaine distance du rebord tronconique 50 et est reliée à ce dernier par une nervure longitudinale droite 54 qui s'étend parallèlement à l'axe 48 et qui est formée en saillie sur la branche 44. Le rayon de la surface périphérique de cette nervure 54 est légèrement inférieur à celui de la surface cylindrique interne 20 de la coupelle 16, et l'étendue angulaire des nervures 54 autour de l'axe 48 est légèrement inférieure à celle des espaces libres 26 entre les nervures hélicoïdales 22 de la coupelle 16, de telle sorte que l'extrémité inférieure de l'organe d'obturation 10 peut être introduite à l'intérieur de la coupelle 16 et positionnée angulairement par rapport aux nervures hélicoïdales 22 en raison de l'engagement des nervures droites 54 dans les espaces libres 26 entre les nervures 22.

Le fond de chaque rainure 52 comporte une petite saillie transversale 56, qui s'étend autour de l'axe 48 sur une étendue angulaire d'environ 45° et qui est formée au voisinage de l'extrémité inférieure de la rainure 52, légèrement au-dessus de la nervure longitudinale 54, et à une distance telle de l'extrémité supérieure de la rainure 52 que cette nervure transversale 56 se trouve en dessous des nervures hélicoïdales 22 de la coupelle 16 dans la position d'obturation de l'organe 10 représentée en figure 1.

Cette nervure transversale 56 peut avoir une forme bi-conique comme représenté sur les dessins, sa face supérieure étant beaucoup plus inclinée sur l'axe 48 que sa face inférieure de telle sorte que cette nervure 56 va constituer un point dur au début du dévissage de l'organe 10.

La coupelle 16 et l'organe d'obturation 10 peuvent être réalisés en matière plastique par moulage de façon relativement simple, la coupelle 16 ne comprenant pas de contre-dépouille et les nervures 22 pouvant être formées sans difficulté au moyen d'une broche que l'on extrait du moule par rotation, les mêmes techniques étant utilisées pour le moulage de l'organe d'obturation 10.

Ce dispositif est utilisé de la façon suivante:
la coupelle 16 étant noyée ou ancrée dans la matière qui délimite le passage 12 et positionnée de telle sorte que les axes de la coupelle et du passage 12 coïncident sensiblement, on présente l'organe d'obturation 10 au-dessus de la coupelle 16 en le positionnant angulairement de telle sorte que les nervures longitudinales 54 de ses branches 44 soient alignées avec les espaces libres 26 entre les nervures 22 de la coupelle 16. Il suffit ensuite de pousser sur l'organe 10 dans l'axe du passage 12 et de la coupelle 16 pour que les extrémités inférieures des branches 44 se resserrent par déformation élastique, ce qui permet de faire passer les rebords tronconiques 50 entre les nervures hélicoïdales 22 et de monter l'organe 10 par clipsage ou encliquetage élastique dans la coupelle 16.

L'orientation angulaire des nervures longitudinales 54 par rapport aux rainures hélicoïdales 52 et aux nervures hélicoïdales 22 de la coupelle 16 est telle que, quand l'organe 10 est ainsi monté par clipsage ou encliquetage élastique, il se trouve automatiquement et directement dans la position représentée en figure 1, qui est celle qu'il occuperait en fin de vissage, les extrémités supérieures des nervures hélicoïdales 22 venant s'engager dans les extrémités supérieures des rainures hélicoïdales 52 de l'organe 10.

Cet organe est ainsi amené directement en position d'obturation étanche, l'étanchéité étant réalisée par la lèvre annulaire 34 du débouché du passage 12 sur laquelle s'appuie la tête 28 de l'organe 10 et/ou par la saillie annulaire interne 36 de l'extrémité supérieure du passage 12, qui est appliquée à étanchéité sur la partie supérieure 38 du corps de l'organe 10, et/ou par un joint torique d'étanchéité enfilé sur la partie supérieure 38 du corps de l'organe 10 juste sous la tête 28.

Pour réaliser la fonction de purge, de dégazage ou de vidange, il suffit de faire tourner l'organe 10 autour de son axe longitudinal 48 sur un peu moins d'un demi-tour pour amener l'extrémité supérieure de la fente 42 au-dessus de la saillie annulaire 36 et pour écarter suffisamment la tête 28 de la lèvre annulaire d'étanchéité 34.

En principe, l'organe d'obturation 10 ne peut être extrait de la coupelle 16 par dévissage, les faces supérieures des rebords tronconiques 50 venant buter sur les extrémités des nervures hélicoïdales 22 et s'opposant à cette extraction.

L'organe d'obturation 10 peut être ramené dans sa position d'obturation étanche du passage 12 par vissage autour de son axe longitudinal sur un peu moins d'un demi-tour, le vissage étant limité par butée sur la coupelle 16 de l'épaulement formé entre les parties 38 et 40 de l'organe 10.

Dans cette position d'obturation, et comme indiqué plus haut, la nervure transversale 56 de chaque branche 44 se trouve en dessous de l'extrémité inférieure de la nervure hélicoïdale correspondante 22 de la coupelle 16 et va donc constituer un point dur au début du dévissage, ce qui empêche l'organe 10 de se dévisser sous l'effet de la pression interne régnant dans le conduit 14 et le passage 12.

Dans une variante, la coupelle 16 peut comprendre, comme représenté schématiquement en pointillés en figure 2, une jupe cylindrique supérieure 58 échancrée ou ajourée qui vient de moulage avec ladite coupelle et qui est destinée à être noyée dans la matière plastique ou élastomère qui délimite le passage 12 au niveau du joint 36, ladite jupe 58 permettant de rigidifier cette matière et d'améliorer la tenue du joint 36 en pression et donc la qualité de l'étanchéité sur la partie 38 de l'organe d'obturation.

En outre, la partie inférieure de la paroi cylindrique 20 de la coupelle 16 peut être prolongée légèrement vers le bas, comme représenté en pointillés en figure 2, en s'amincissant en biseau vers son extrémité, pour améliorer l'étanchéité de l'appui de la partie inférieure de la coupelle sur un noyau lors du surmoulage de la matière dans laquelle la coupelle est noyée, ce qui évite la formation de bavures de matière surmoulée vers l'intérieur du passage 12, grâce au fait que l'extrémité inférieure amincie de la paroi 20 vient s'écraser légèrement sur le noyau précité à la fermeture du moule de surmoulage.

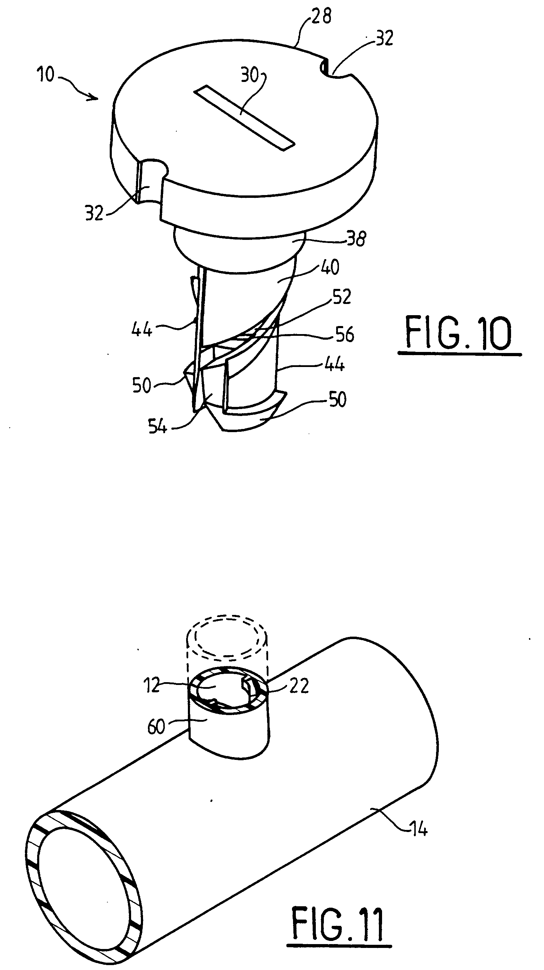

Dans la variante de réalisation représentée schématiquement en figure 11, le dispositif selon l'invention ne comprend pas de coupelle 16, et les nervures hélicoïdales 22 sont formées directement de moulage sur la surface cylindrique interne d'une pièce tubulaire 60 qui délimite le passage 12 et qui est formée d'une pièce avec le conduit 14 ou qui est rapportée sur ce dernier.

Dans la représentation de la figure 11, cette pièce 60 a été coupée approximativement à mi-hauteur de façon à ce que les nervures hélicoïdales 22 soient visibles, sa partie supérieure étant représentée en trait fantôme et étant analogue à la partie du passage 12 située au dessus de la coupelle 16 dans le mode de réalisation représenté en figure 1.

De façon générale, le dispositif selon l'invention est applicable dans de nombreux domaines techniques et industriels et offre les avantages d'une fabrication et d'un montage simples et économiques.

## Revendications

1. Dispositif de purge ou de vidange d'un conduit, comprenant un organe vissable d'obturation (10) monté dans un passage (12) débouchant dans le conduit (14), des moyens d'étanchéité (34, 36) coopérant avec cet organe, l'organe (10) comprenant un corps sensiblement cylindrique et un canal de dégazage ou de passage de fluide formé par une fente longitudinale (42) qui s'étend depuis l'extrémité interne du corps située à l'intérieur du passage (12), caractérisé en ce que le corps de l'organe (10) est formé sur sa surface périphérique avec au moins une rainure hélicoïdale (52) dans laquelle est engagée une nervure hélicoïdale (22) formée en saillie sur la surface interne du passage (12), et en ce que la fente (42) permet une compression radiale élastique dudit corps, positionné angulairement et introduit dans le passage (12) par engagement d'une nervure longitudinale (54) dans au moins un espace (26) laissé libre de la surface interne dudit passage (12), pour le montage du dispositif en position de vissage par clipsage ou encliquetage dans ladite nervure hélicoïdale (22).

2. Dispositif selon la revendication 1, caractérisé en ce que le corps de l'organe (10) comprend deux rainures hélicoïdales (52) précitées, identiques et symétriques l'une de l'autre par rapport à l'axe (48) du corps, et en ce que la surface interne du passage (12) comprend deux nervures hélicoïdales (22) en saillie identiques et symétriques l'une de l'autre par rapport à l'axe (24) du passage et engagées chacune dans une rainure (52) dudit corps.

3. Dispositif selon la revendication 2, caractérisé en ce que chaque rainure (52) et chaque nervure (22) précitées s'étend sur moins de 180° par rapport à l'axe du corps ou du passage respectivement.

4. Dispositif selon la revendication 3, caractérisé en ce que chaque rainure hélicoïdale (52) se termine, du côté de l'extrémité interne du corps, par une nervure longitudinale droite (54) destinée à être engagée dans un espace (26) laissé libre entre les nervures hélicoïdales (22) de la surface interne du passage (12).

5. Dispositif selon la revendication 4, caractérisé en ce que, quand les nervures longitudinales (54) sont dans les espaces libres (26) entre les nervures hélicoïdales (22) du passage (12), les autres extrémités des rainures hélicoïdales (52) sont sensiblement alignées, parallèlement à l'axe du corps et du passage (12), avec les extrémités situées vers l'extérieur des nervures hélicoïdales (22) du passage 12.

6. Dispositif selon l'une des revendications précédentes, caractérisé en ce que chaque rainure hélicoïdale (52) comporte, au voisinage de son extrémité interne, une saillie (56) formant un point dur lors de la rotation du corps quand elle est amenée au contact d'une nervure hélicoïdale (22) du passage (12).

7. Dispositif selon l'une des revendications précédentes, caractérisé en ce que l'extrémité interne du corps comporte un rebord annulaire (50), par exemple de forme tronconique, engageable par compression radiale élastique de l'extrémité interne du corps entre les nervures hélicoïdales (22) du passage (12) et s'opposant à l'extraction complète du corps hors du passage (12).

8. Dispositif selon l'une des revendications précédentes, caractérisé en ce que lesdites rainures et nervures hélicoïdales (52, 22) sont à section transversale rectangulaire ou carrée.

9. Dispositif selon l'une des revendications précédentes, caractérisé en ce que ladite fente longitudinale (42) du corps passe par l'axe (48) de ce dernier et s'étend le long de celui-ci au moins jusqu'à l'extrémité des rainures hélicoïdales (52) située vers l'extrémité extérieure dudit corps.

10. Dispositif selon l'une des revendications précédentes, caractérisé en ce que lesdites nervures hélicoïdales (22) sont formées sur une coupelle (16) tronconique ajourée, qui est noyée dans la matière délimitant le passage (12).

11. Dispositif selon l'une des revendications 1 à 9, caractérisé en ce que lesdites nervures hélicoïdales (22) sont formées de moulage sur la face interne cylindrique d'une pièce tubulaire (60) rapportée sur le conduit (14) ou faisant partie de celui-ci.

12. Dispositif selon l'une des revendications précédentes, caractérisé en ce que le passage (12) comprend au moins une saillie annulaire (36) ou une lèvre annulaire (34) coopérant à étanchéité avec le corps ou la tête (28) de l'organe d'obturation (10).

13. Dispositif selon l'une des revendications précédentes, caractérisé en ce qu'un joint torique d'étanchéité est monté sur la partie supérieure ou extérieure du corps de l'organe d'obturation (10), sous la tête (28) de celui-ci.

14. Dispositif selon l'ensemble des revendications 10 et 12, caractérisé en ce que ladite coupelle (16) comprend une jupe cylindrique (58) noyée dans la matière délimitant le passage (12) à hauteur de ladite saillie annulaire (36) pour renforcer la tenue de celle-ci en pression.

15. Dispositif selon la revendication 10 ou 14, caractérisé en ce que ladite coupelle comprend une paroi cylindrique (20) dont l'extrémité inférieure est amincie.

## Patentansprüche

1. Entleer- oder Ablaßvorrichtung für eine Leitung, mit einem einschraubbaren Verschlußorgan (10), das in einer in die Leitung (14) mündenden Passage (12) angebracht ist, Dichteinrichtungen (34, 36), die mit diesem Organ zusammenwirken, wobei das Organ (10) einen im wesentlichen zylindrischen Körper aufweist sowie einen Entgasungs- bzw. Fluiddurchlaßkanal, der durch einen Längsschlitz (42) ausgebildet ist, welcher sich ab dem im Inneren der Passage (12) gelegenen inneren Ende des Körpers erstreckt, dadurch gekennzeichnet, daß der Körper des Organs (10) auf seiner Umfangsfläche mit mindestens einer wendelförmigen Nut (52) ausgebildet ist, in die eine auf der Innenfläche der Passage (12) vorspringend ausgebildete, wendelförmige Rippe (22) eingreift, sowie dadurch, daß der Schlitz (42) ein elastisches radiales Zusammendrücken des Körpers ermöglicht, der winkelmäßig angeordnet und in die Passage (12) eingeführt ist mittels Eingriff einer Längsrippe (54) in mindestens einen von der Innenfläche der Passage (12) freigelassenen Freiraum (26), zum Anbringen der Vorrichtung in der Einschraubposition mittels Einschnappen oder Einrasten an der wendelförmigen Rippe (22).

2. Vorrichtung nach Anspruch 1, dadurch gekennzeichnet, daß der Körper des Organs (10) zwei erwähnte wendelförmige Nuten (52) aufweist, die miteinander identisch und bezüglich einer Achse (48) des Körpers zueinander symmetrisch sind, sowie dadurch, daß die Innenfläche der Passage (12) zwei vorstehende wendelförmige Rippen (22) aufweist, die miteinander identisch und bezüglich der Achse (24) der Passage zueinander symmetrisch sind und jeweils in eine Nut (52) des Körpers eingreifen.

3. Vorrichtung nach Anspruch 2, dadurch gekennzeichnet, daß jede Nut (52) und jede Rippe (22) sich über weniger als 180° bezüglich der Achse des Körpers bzw. der Passage erstreckt.

4. Vorrichtung nach Anspruch 3, dadurch gekennzeichnet, daß jede wendelförmige Nut (52) auf der Seite des inneren Endes des Körpers in einer geraden Längsrippe (54) endet, die für den Eingriff in einen Freiraum (26) vorgesehen ist, der zwischen den wendelförmigen Rippen (22) der Innenfläche der Passage (12) freigelassen ist.

5. Vorrichtung nach Anspruch 4, dadurch gekennzeichnet, daß, wenn sich die Längsrippen (54) in den Freiräumen (26) zwischen den wendelförmigen Rippen (22) der Passage (12) befinden, die weiteren Enden der wendelförmigen Nuten (52) parallel zur Achse des Körpers und der Passage (12) im wesentlichen mit den nach außen hin gelegenen Enden der wendelförmigen Rippen (22) der Passage (12) fluchten.

6. Vorrichtung nach einem der vorhergehenden Ansprüche, dadurch gekennzeichnet, daß jede wendelförmige Nut (52) in der Nähe ihres inneren Endes einen Vorsprung (56) aufweist, der bei der Drehung des Körpers eine harte Stelle bildet, wenn er in Anlage an eine wendelförmige Rippe (22) der Passage (12) gebracht wird.

7. Vorrichtung nach einem der vorhergehenden Ansprüche, dadurch gekennzeichnet, daß das innere Ende des Körpers einen ringförmigen, beispielsweise stumpfkegelförmigen Einfassungsrand (50) aufweist, der durch elastisches radiales Zusammendrücken des inneren Endes des Körpers zwischen den wendelförmigen Rippen (22) der Passage (12) in Eingriff gebracht werden kann und dem vollständigen Herausziehen des Körpers aus der Passage (12) entgegenwirkt.

8. Vorrichtung nach einem der vorhergehenden Ansprüche, dadurch gekennzeichnet, daß die wendelförmigen Nuten und Rippen (52, 22) einen rechtwinkligen oder quadratischen Querschnitt aufweisen.

9. Vorrichtung nach einem der vorhergehenden Ansprüche, dadurch gekennzeichnet, daß der Längsschlitz (42) des Körpers durch dessen Achse (48) verläuft und sich über dessen Länge mindestens bis zu dem Ende der wendelförmigen Nuten (52) erstreckt, das zum äußeren Ende des Körpers hin gelegen ist.

10. Vorrichtung nach einem der vorhergehenden Ansprüche, dadurch gekennzeichnet, daß die wendelförmigen Rippen (22) auf einer durchbrochenen stumpfkegelförmigen Schale (16) ausgebildet sind, die in den die Passage (12) begrenzenden Werkstoff eingebettet ist.

11. Vorrichtung nach einem der Ansprüche 1 bis 9, dadurch gekennzeichnet, daß die wendelförmigen Rippen (22) auf der zylindrischen Innenfläche eines Rohrabschnitts (60) angeformt sind, der an die Leitung (14) angeschlossen bzw. Teil davon ist.

12. Vorrichtung nach einem der vorhergehenden Ansprüche, dadurch gekennzeichnet, daß die Passage (12) mindestens einen ringförmigen Vorsprung (36) oder eine ringförmige Lippe (34) aufweist, der bzw. die dichtend mit dem Körper bzw. dem Kopf (28) des Verschlußorgans (10) zusammenwirkt.

13. Vorrichtung nach einem der vorhergehenden Ansprüche, dadurch gekennzeichnet, daß eine Wulstdichtung auf dem oberen oder äußeren Abschnitt des Körpers des Verschlußorgans (10) unterhalb von dessen Kopf (28) angebracht ist.

14. Vorrichtung nach der Gesamtheit der Ansprüche 10 und 12, dadurch gekennzeichnet, daß die Schale (16) einen zylindrischen Aufsatz (58) aufweist, der in den die Passage (12) begrenzenden Werkstoff auf Höhe des ringförmigen Vorsprungs (36) eingebettet ist, um dessen Druckfestigkeit zu verstärken.

15. Vorrichtung nach Anspruch 10 oder 14, dadurch gekennzeichnet, daß die Schale eine zylindrische Wandung (20) aufweist, deren unteres Ende abgeschrägt ist.

## Claims

1. A device for bleeding or draining a duct, the device comprising a screwable closure member (10) mounted in a passage (12) that opens out into the duct (14), sealing means (34, 36) co-operating with said member, the member (10) comprising a substantially cylindrical body and a de-gassing or fluid-passing channel formed by a longitudinal slot (42) extending from the inside end of the body situated in the passage (12), the device being characterized in that the body of the member is formed with at least one helical groove (52) in its peripheral surface, in which groove there is engaged a helical rib (22) formed to project from the inside surface of the passage (12), and in that the slot (42) enables said body, when angularly positioned and inserted in the passage (12) by engagement with a longitudinal rib (54) in at least one space (26) left empty on the inside surface of said passage (12), to be resiliently compressed radially for mounting the device in the screwing position by clipping or snapfastening in said helical rib (22).

2. A device according to claim 1, characterized in that the body of the member (10) comprises two of the above-mentioned helical grooves (52) which are identical and symmetrical to each other about the axis (48) of the body, and in that the inside surface of the passage (12) comprises two projecting helical ribs (22) which are identical and symmetrical to each other about the axis (24) of the passage and each of which is engaged in one of the grooves (52) of said body.

3. A device according to claim 2, characterized in that each above-mentioned groove (52) and each above-mentioned rib (22) extends over less than 180° about the axis of the body or the passage respectively.

4. A device according to claim 3, characterized in that each helical groove (52) terminates adjacent to the inside end of the body in a straight longitudinal rib (52) designed to be engaged in a space (26) left empty between the helical ribs (22) of the inside surface of the passage (12).

5. A device according to claim 4, characterized in that when the longitudinal ribs (54) are in the empty spaces (26) between the helical ribs (22) of the passage (12), the other ends of the helical grooves (52) are substantially in alignment with the outer ends of the helical ribs (22) of the passage (12), parallel to the axis of the body and of the passage (12).

6. A device according to any preceding claim, characterized in that each helical rib (52) includes a projection (56) in the vicinity of its inner end, which projection (56) forms a hard point during rotation of the body when it is brought into contact with a helical rib (22) of the passage (12).

7. A device according to any preceding claim, characterized in that the inner end of the body includes an annular rim (50), e.g. of frustoconical shape, that is engageable by radial resilient compression of the inner end of the body between the helical ribs (22) of the passage (12) and that prevents the body being fully extracted from the passage (12).

8. A device according to any preceding claim, characterized in that said helical ribs and grooves (22, 52) are of square or rectangular cross-section.

9. A device according to any preceding claim, characterized in that said longitudinal slot (42) of the body contains the axis (48) thereof and extends along the body at least as far as the ends of the helical grooves (52) that are situated nearer to the outer end of said body.

10. A device according to any preceding claim, characterized in that said helical ribs (22) are formed by a perforated frustoconical collar (16) which is embedded in the material defining the passage (12).

11. A device according to any one of claims 1 to 9, characterized in that said helical ribs (22) are formed by being molded on the cylindrical inside face of a tubular part (60) applied to the duct (14) or forming a portion thereof.

12. A device according to any preceding claim, characterized in that the passage (12) includes at least one annular projection (36) or annular lip (34) co-operating in sealed manner with the body or the head (28) of the closure member (10).

13. A device according to any preceding claim, characterized in that an O-ring is mounted on the top or outer portion of the body of the closure member (10), adjacent the head (28) thereof.

14. A device according to claims 10 and 12 taken together, characterized in that said collar (16) has a cylindrical skirt (58) embedded in the material defining the passage (12) level with said annular projection (36) so as to reinforce the resistance thereof to pressure.

15. A device according to claim 10 or 14, characterized in that said collar includes a cylindrical wall (20) whose bottom end tapers.
